# EUROPEAN PATENT APPLICATION

(11) **EP 4 657 234 A1**
(43) Date of publication of application: **03.12.2025**
(21) Application number: 25153291.7
(22) Date of filing: 22.01.2025
(51) Int. Cl.: G06F 3/06, H04L 67/1097

(54) **RESOURCE SCHEDULING METHOD BASED ON CLOUD STORAGE SYSTEM, ELECTRONIC DEVICE, AND STORAGE MEDIUM**

(30) Priority: 31.05.2024 CN 202410705719
(71) Applicant: Beijing Volcano Engine Technology Co., Ltd., Beijing 100190 (CN)
(72) Inventor: LIU, Chenming, Beijing, 100028 (CN); LUO, Xiaodong, Beijing, 100028 (CN); HU, Zhenguo, Beijing, 100028 (CN); YANG, Tao, Beijing, 100028 (CN); QU, Xiongjun, Beijing, 100028 (CN)
(74) Representative: Isarpatent

(57) **Abstract**

A resource scheduling method based on a cloud storage system, an electronic device and a storage medium are provided. The method includes: obtaining a traffic characteristic of a target cloud disk and a traffic characteristic of each of a plurality of candidate storage clusters in response to a scheduling instruction of the target cloud disk; matching a target scheduling strategy from a preset scheduling strategy set according to the traffic characteristic of the target cloud disk and the traffic characteristic of each of the plurality of candidate storage clusters; in which the scheduling strategy set is used for maintaining a plurality of scheduling strategies configured based on different traffic characteristics; matching at least one candidate storage cluster from the plurality of candidate storage clusters as a target storage cluster according to the target scheduling strategy, and controlling the target cloud disk to be scheduled to the target storage cluster.

## Description

### CROSS-REFERENCE TO RELATED APPLICATION

The present application claims the priority of Chinese patent application No. 202410705719.9 filed on May 31, 2024, and the disclosure of the above-mentioned Chinese patent application is hereby incorporated in its entirety as a part of the present application.

### TECHNICAL FIELD

An embodiment of the disclosure relates a resource scheduling method based on a cloud storage system, an apparatus, an electronic device, a storage medium and a program product.

### BACKGROUND

With the rapid development of Internet technology, cloud technology has gradually entered lives of people. Cloud technology provides users with various resources (such as computing resources and storage resources) distributed in data centers all over the world through the Internet. There are hundreds of thousands of servers in a large data center, and effectively managing and scheduling the resources of such a large-scale data center is a major challenge in academia and industry.

At present, the commonly used resource balanced scheduling algorithm in the industry is to select a cluster with the richest resource margin in response to creating a cloud disk for the first time. During the secondary balanced scheduling, a cluster capacity overload problem is solved based on the capacity algorithm.

However, the resource balanced scheduling algorithm in some technologies cannot effectively improve the performance balance degree between clusters.

### SUMMARY

The embodiments of the present disclosure provide a resource scheduling method based on a cloud storage system, an apparatus, an electronic device, a storage medium and a program product, so as to improve the performance balance degree between clusters.

The embodiments of the present disclosure provide a resource scheduling method based on a cloud storage system, which includes:
obtaining a traffic characteristic of a target cloud disk and a traffic characteristic of each of a plurality of candidate storage clusters in response to a scheduling instruction of the target cloud disk;
matching a target scheduling strategy from a preset scheduling strategy set according to the traffic characteristic of the target cloud disk and the traffic characteristic of each of the plurality of candidate storage clusters; in which the scheduling strategy set is used for maintaining a plurality of scheduling strategies configured based on different traffic characteristics;
matching at least one candidate storage cluster from the plurality of candidate storage clusters as a target storage cluster according to the target scheduling strategy, and controlling the target cloud disk to be scheduled to the target storage cluster.

The embodiments of the present disclosure further provides a resource scheduling apparatus, which includes:
a characteristic obtaining module, configured to obtain a traffic characteristic of a target cloud disk and a traffic characteristic of each of a plurality of candidate storage clusters in response to a scheduling instruction of the target cloud disk;
a strategy matching module, configured to match a target scheduling strategy from a preset scheduling strategy set according to the traffic characteristic of the target cloud disk and the traffic characteristic of each of the plurality of candidate storage clusters; in which the scheduling strategy set is used for maintaining a plurality of scheduling strategies configured based on different traffic characteristics; and
a cluster matching module, configured to match at least one candidate storage cluster from the plurality of candidate storage clusters as a target storage cluster according to the target scheduling strategy, and control the target cloud disk to be scheduled to the target storage cluster.

The embodiments of the present disclosure further provides an electronic device, which includes:
at least one processor; and
a memory in communication connection with the at least one processor; in which
a computer program is stored on the memory, and the computer program, when executed by the at least one processor, cause the at least one processor to execute the resource scheduling method based on the cloud storage system provided by the embodiments of the present disclosure.

The embodiments of the present disclosure further provides a computer-readable storage medium, in which a computer instruction is stored on the computer-readable storage medium, when executed by a processor, causes the processor to implement the resource scheduling method based on the cloud storage system provided by the embodiments of the present disclosure.

The embodiments of the present disclosure further provides a computer program which, when executed by a processor, implements the resource scheduling method based on the cloud storage system provided by the embodiments of the present disclosure.

### BRIEF DESCRIPTION OF DRAWINGS

The above and other features, advantages, and aspects of each embodiment of the present disclosure may become more apparent by combining drawings and referring to the following specific implementation modes. In the drawings throughout, same or similar drawing reference signs represent same or similar elements. It should be understood that the drawings are schematic, and originals and elements may not necessarily be drawn to scale.
Fig. 1 is a flowchart of a resource scheduling method based on a cloud storage system provided by an embodiment of the present disclosure.
Fig. 2 is a flowchart of another resource scheduling method based on a cloud storage system provided by an embodiment of the present disclosure.
Fig. 3 is an architecture diagram of a portrait and a scheduling system provided by an embodiment of the present disclosure.
Fig. 4 is a schematic diagram of a primary scheduling process of a cloud disk provided by an embodiment of the present disclosure.
Fig. 5 is a structural block diagram of a resource scheduling apparatus based on a cloud storage system provided by an embodiment of the present disclosure.
Fig. 6 is a schematic structural diagram of an electronic device provided by an embodiment of the present disclosure.

### DETAILED DESCRIPTION

Embodiments of the present disclosure are described in more detail below with reference to the drawings. Although certain embodiments of the present disclosure are shown in the drawings, it should be understood that the present disclosure may be achieved in various forms and should not be construed as being limited to the embodiments described here. On the contrary, these embodiments are provided to understand the present disclosure more clearly and completely. It should be understood that the drawings and the embodiments of the present disclosure are only for exemplary purposes and are not intended to limit the scope of protection of the present disclosure.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that unless otherwise explicitly stated in the context, it should be understood as "one or more".

Names of messages or information exchanged among multiple devices in the embodiment of the present disclosure are only used for illustrative purposes, and are not used to limit the scope of these messages or information.

It can be understood that the data involved in this technical scheme (including but not limited to the data itself, data acquisition or use) shall comply with the requirements of corresponding laws, regulations and relevant regulations.

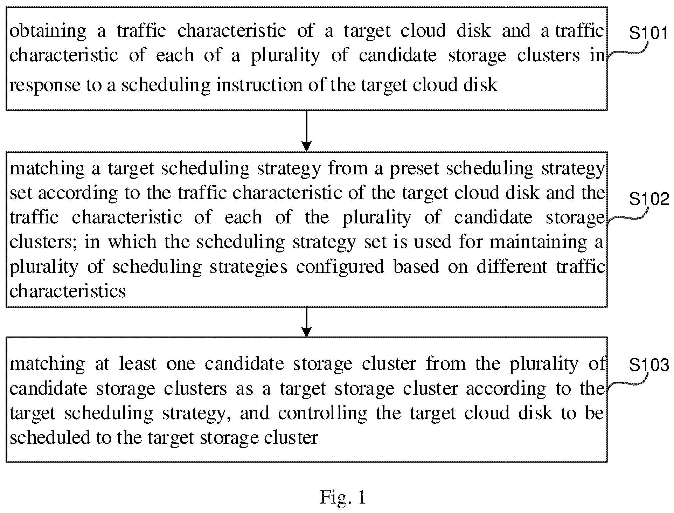

Fig. 1 is a flowchart of a resource scheduling method based on a cloud storage system provided by an embodiment of the present disclosure. The method can be executed by a storage scheduling system, such as a resource scheduling apparatus based on a cloud storage system in the storage scheduling system, the apparatus can be implemented by software and/or hardware and can be configured in an electronic device, for example, a mobile phone or a tablet computer. The resource scheduling method based on the cloud storage system provided by the embodiment of the present disclosure is suitable for a scene in which storage resources are scheduled, such as a scene in which primary scheduling or secondary scheduling is performed on a cloud disk.

For cloud storage technology, considering an influence of a fault domain, hundreds of thousands of servers in one or more data centers will be managed according to granularity of clusters, and each storage cluster manages dozens to hundreds of servers. The storage resource that a user (such as a cloud service tenant) applies for in the cloud will be allocated to a storage cluster in a data center, and the storage cluster will provide a storage volume (that is, a cloud disk) for the user to use. However, in the operating process, with the change of a user business model and batch creation and deletion of storage volumes, the capacity and performance resources of each storage cluster will be different. Such difference may continue to intensify, leading to a serious imbalance of resources among a plurality of storage clusters, and even leading to overload of some storage resources.

In some technologies, generally, the storage cluster with the richest resource margin is selected using a balanced scoring algorithm based on the resource margin during the creation of volumes for the first time. During the secondary balanced scheduling, the storage cluster capacity overload problem is solved based on a capacity algorithm.

However, the balanced scheduling algorithm based on the resource margin in related technologies does not take into account characteristics of the cloud disk itself, such as quick creation and quick deletion, log-based data archiving and storage, etc., and cannot carry out targeted scheduling for the characteristics of the cloud disk and the business model. In response to selecting the storage volume, the business model and the performance tidal distribution of the storage volume are not taken into account, therefore it is impossible to stagger the volumes with similar business models and similar performance tidal distributions through secondary scheduling, and it is impossible to alleviate a resource contention phenomenon. Moreover, some storage volumes with a short life cycle (that is, storage volumes that will be deleted soon after the volumes are created) cannot be identified, and scheduling for such storage volumes will produce invalid scheduling overhead.

In view of this, the embodiment of the present disclosure provides a resource scheduling method based on a cloud storage system, which uses a scheduling strategy that is matched with a traffic characteristic of the cloud disk and a traffic characteristic of the candidate storage cluster to schedule the cloud disk in a targeted manner, so as to prevent the resource consumption of a cloud service tenant in the same cluster from exceeding the upper limit of the cluster carrying capacity and improve the performance balance degree between clusters.

As shown in Fig. 1, the resource scheduling method based on the cloud storage system provided by the embodiment may include the following steps.

S101: obtaining a traffic characteristic of a target cloud disk and a traffic characteristic of each of a plurality of candidate storage clusters in response to a scheduling instruction of the target cloud disk.

The scheduling instruction may be an instruction for instructing resource scheduling of the cloud disk. For example, resource scheduling of the cloud disk can include primary scheduling and/or secondary scheduling. The primary scheduling of the cloud disk can be understood as a creation of the cloud disk, and the secondary scheduling of the cloud disk can be understood as a migration of the cloud disk. The creation of the cloud disk can be to create a cloud disk in a storage cluster. The migration of the cloud disk can be the location migration of the cloud disk between different storage clusters, such as moving the cloud disk from one storage cluster to another storage cluster. Exemplarily, the scheduling instruction may be a first scheduling instruction or a second scheduling instruction for the cloud disk.

The target cloud disk can be the cloud disk corresponding to the scheduling instruction, that is, the cloud disk indicated by the scheduling instruction for scheduling. The candidate storage cluster can be understood as a storage cluster that can be selected for resource scheduling. The traffic characteristic can be used to describe the resource usage of the corresponding object (such as the target cloud disk and/or the candidate storage cluster). The traffic characteristic may include, for example, a resource characteristic, a performance distribution characteristic and/or a life cycle characteristic, etc. Alternatively, the traffic characteristic of the cloud disk include a performance distribution characteristic and/or a life cycle characteristic. The traffic characteristic of the storage cluster include a performance distribution characteristic and/or an available resource characteristic. The performance distribution characteristic can be used to describe the storage performance occupation of the corresponding object in different periods of time in the preset performance distribution period, such as a bandwidth occupied in different periods of time in the preset performance distribution period (that is, the amount of data transmitted per second) and/or input/output resources. The input/output resources can be characterized by the number of Input/Output Per Second (IOPS), for example. Exemplarily, the performance distribution characteristic may be performance tidal distribution information. The life cycle characteristic of the target cloud disk can be used to describe the life cycle of the target cloud disk, such as the life cycle length of the target cloud disk. The available resource characteristic of the candidate storage cluster can be used to describe the available resource of the target cloud disk, such as an available bandwidth and/or capacity of the target cloud disk.

The preset performance distribution period can be consider as a pre-set performance distribution period. The period length of the preset performance distribution period can be set as required. For example, the period length of the preset performance distribution period can be set as one day, one week or one month, so that the performance distribution characteristic of the target cloud disk can be used to describe the performance occupation of the target cloud disk in different periods of time in one day, one week or one month. The performance distribution characteristic of the candidate storage cluster can be used to describe the performance occupation of the candidate storage cluster in different periods of time in one day, one week or one month. Storage performance can be understood as a performance index that can be provided to users, which usually includes two dimensions: bandwidth and IOPS.

Specifically, in response to receiving a scheduling instruction for the target cloud disk, the traffic characteristic of the target cloud disk and the respective traffic characteristic of each of a plurality of candidate storage clusters can be obtained in response to the scheduling instruction, so as to facilitate the subsequent selection of a scheduling strategy matching the traffic characteristic of the target cloud disk and the traffic characteristic of each candidate storage cluster to schedule the target cloud disk.

For example, after receiving the scheduling instruction, the received scheduling instruction can be parsed to determine the target cloud disk corresponding to the scheduling instruction. A storage cluster list is obtained. Each storage cluster in the storage cluster list is filtered. For example, resource check and/or health check are performed on each storage cluster in the storage cluster list. The cluster in the storage cluster list that can provide storage services is determined as a candidate storage cluster. The traffic characteristic of the target cloud disk and the traffic characteristic of each candidate storage cluster are obtained.

In this embodiment, the traffic characteristic of each cloud disk in the cloud storage system and the traffic characteristic of each storage cluster in the cloud storage system can be maintained. For example, the traffic characteristic of each cloud disk in the cloud storage system and the traffic characteristic of each storage cluster in the cloud storage system are dynamically maintained, so as to ensure that the stored traffic characteristic is the latest traffic characteristic and improve the accuracy and practicability of the stored traffic characteristic.

At this time, alternatively, the resource scheduling method based on the cloud storage system can further include: dynamically maintaining a traffic characteristic of a cloud disk created by each cloud service tenant in the cloud storage system and a traffic characteristic of each storage cluster in the cloud storage system, in which the traffic characteristic of the cloud disk includes a performance distribution characteristic and/or a life cycle characteristic; and the traffic characteristic of the storage cluster includes a performance distribution characteristic and/or an available resource characteristic.

For example, the traffic characteristic of each cloud disk in the cloud storage system and the traffic characteristic of each storage cluster in the cloud storage system can be calculated and stored in advance; and the stored traffic characteristic of each cloud disk and the traffic characteristic of each storage cluster can be updated according to a preset update cycle.

The traffic characteristic of the cloud disk and/or the storage cluster can be obtained by analyzing the resource occupation. Here, the resource occupation of the target cloud disk and/or the candidate storage cluster may include a historical resource occupation and/or a current resource occupation, which may include the capacity occupation and the performance occupation and may be set specifically as required.

In some implementations, obtaining traffic characteristic of the target cloud disk and the traffic characteristic of each of the plurality of candidate storage clusters in response to a scheduling instruction of the target cloud disk includes: generating a first scheduling instruction of the target cloud disk in response to a request for creating the target cloud disk initiated by a cloud service tenant; and in response to the first scheduling instruction of the target cloud disk, obtaining the traffic characteristic of a historical cloud disk of the cloud service tenant as the traffic characteristic of the target cloud disk and obtaining the traffic characteristic of each of the plurality of candidate storage clusters.

The request for creating the target cloud disk can be used to request the creation of the target cloud disk. The first scheduling instruction may be an instruction for instructing to perform primary scheduling on the target cloud disk, that is, a scheduling instruction for instructing to create the target cloud disk. The historical cloud disk can be understood as the cloud disk created historically by the cloud service tenant who applies to create the target cloud disk, that is, the cloud disk created by the cloud service tenant before the target cloud disk.

In the above implementations, in response to primary scheduling being performed on the target cloud disk, the traffic characteristic of the cloud disk historically created by the cloud service tenant corresponding to the target cloud disk can be obtained as the traffic characteristic of the target cloud disk.

Specifically, in response to a cloud service tenant requests for creating a cloud disk, the cloud disk requested to be created by the cloud service tenant can be used as the target cloud disk to generate the first scheduling instruction for the target cloud disk. In response to the first scheduling instruction, the traffic characteristics of at least part of the cloud disks created historically by the cloud service tenant are obtained as the traffic characteristics of the target cloud disk; and in response to the first scheduling instruction, the traffic characteristics of a plurality of candidate storage clusters in the cloud storage system are obtained.

In some implementations, obtaining the traffic characteristic of the target cloud disk and the traffic characteristic of each of the plurality of candidate storage clusters in response to the scheduling instruction of the target cloud disk includes: detecting an operating state of a current storage cluster, and in response to the operating state satisfying a scheduling condition, initiating a second scheduling instruction for the target cloud disk which has been created and operated in the current storage cluster; and obtaining the traffic characteristic of the target cloud disk and obtaining the traffic characteristic of each of the plurality of candidate storage clusters in response to the second scheduling instruction for the target cloud disk.

The current storage cluster can be the currently detected storage cluster, which can be any storage cluster in the cloud storage system. The operating state can be, for example, the resource occupation, such as whether the current storage cluster has too high resource occupation or too high load. The second scheduling instruction may be an instruction for instructing to perform secondary scheduling on the target cloud disk, that is, a scheduling instruction for instructing the migration of the target cloud disk.

In the above implementations, in response to performing secondary scheduling on the target cloud disk, the traffic characteristic of the cloud disk created historically by the cloud service tenant corresponding to the target cloud disk can be obtained as the traffic characteristic of the target cloud disk. For example, the life cycle characteristic of the cloud disk created historically by the corresponding cloud service tenant is obtained as the life cycle characteristic of the target cloud disk. The traffic characteristic of the target cloud disk can also be obtained based on the analysis of the resource occupation of the target cloud disk. For example, the performance distribution characteristic of the target cloud disk is obtained based on the analysis of the resource occupation of the target cloud disk, and so on.

Specifically, the operating state of the current storage cluster can be detected for each storage cluster of the cloud service system. In response to the operating state satisfying the scheduling condition, for example, in response to the resource occupation ratio of the current storage cluster is greater than a preset ratio threshold, at least part of cloud disks that have been created and operated in the current storage cluster are taken as target cloud disks, and a second scheduling instruction for the target cloud disks is sent. Moreover, in response to the second scheduling instruction, the traffic characteristic of the target cloud disk and the traffic characteristics of a plurality of candidate storage clusters in the cloud storage system are obtained.

S102, matching a target scheduling strategy from a preset scheduling strategy set according to the traffic characteristic of the target cloud disk and the traffic characteristic of each of the plurality of candidate storage clusters; in which the scheduling strategy set is used for maintaining a plurality of scheduling strategies configured based on different traffic characteristics.

A plurality of scheduling strategies can be maintained in the scheduling strategy set, which are configured based on different traffic characteristics. The target scheduling strategy can be understood as the scheduling strategy used upon scheduling the target cloud disk. In response to the traffic characteristics of the target cloud disk and/or the respective traffic characteristics of the candidate storage cluster being different, the determined target scheduling strategies may be different. The scheduling strategies (such as target scheduling strategies and/or candidate scheduling strategies) can be used to select the target storage clusters. In response to the used scheduling strategies being different, selection methods (such as evaluation criteria) of the target storage clusters can be different.

In this embodiment, after obtaining the traffic characteristic of the target cloud disk and the traffic characteristic of each of the plurality of available candidate storage clusters, the target scheduling strategy of the target cloud disk can be matched from the scheduling strategy set according to the traffic characteristic of the target cloud disk and the traffic characteristic of each of the candidate storage clusters.

For example, a plurality of candidate scheduling strategies can be preset to form a scheduling strategy set. Therefore, after obtaining the traffic characteristic of the target cloud disk and the traffic characteristic of each of the candidate storage clusters, one or more candidate scheduling strategies matched with the traffic characteristic of the target cloud disk and the traffic characteristic of each of the candidate storage cluster can be selected from the scheduling strategy set as the target scheduling strategy.

The candidate scheduling strategy can be understood as an alternative scheduling strategy, and the candidate scheduling strategy can be set in advance. Exemplarily, different candidate scheduling strategies can correspond to different strategy conditions, which can be understood as conditions that the target cloud disk and/or the candidate storage cluster should satisfy in response to the scheduling strategy being to be used for resource scheduling, that is, the conditions that the traffic characteristic of the target cloud disk and/or the traffic characteristic of each of the candidate storage clusters should satisfy. The strategy conditions corresponding to each candidate scheduling strategy can be configured as required in advance.

Therefore, in response to determining the target scheduling strategy, each of the preset candidate scheduling strategies and the strategy conditions corresponding to each of the candidate scheduling strategies can be obtained; the traffic characteristic of the target cloud disk and the traffic characteristic of each of the candidate storage clusters are matched with each strategy condition to obtain the strategy conditions that the traffic characteristic of the target cloud disk and the traffic characteristic of each of the candidate storage clusters satisfy, and the candidate scheduling strategy corresponding to the met strategy condition is taken as the target scheduling strategy.

For example, the traffic characteristic of the cloud disk to be scheduled (including the target cloud disk) and the traffic characteristic of each of the candidate storage clusters can be preset, so as to determine to use a certain scheduling strategy for scheduling in response to satisfying a certain condition. Therefore, after obtaining the traffic characteristic of the target cloud disk and the traffic characteristic of each of the candidate storage cluster, condition matching can be carried out to determine the conditions that the traffic characteristic of the target cloud disk and the traffic characteristic of each of the candidate storage cluster satisfy, and then the target scheduling strategy to be used can be determined.

In this embodiment, the scheduling strategy set can be maintained. For example, the scheduling strategy set is dynamically maintained, so as to update the scheduling strategies contained in the scheduling strategy set and improve the practicability of the scheduling strategies in the scheduling strategy set.

Alternatively, the resource scheduling method based on the cloud storage system further includes: dynamically maintaining the scheduling strategy set, in which the scheduling strategy set at least includes any one or more of a group consisting of a scheduling strategy based on a complementary performance characteristic, a scheduling strategy based on a service type and a scheduling strategy based on a cloud disk life cycle. The scheduling strategy based on the complementary performance characteristic is used for indicating that the cloud disk is preferentially scheduled to the target storage cluster with complementary performance to the cloud disk; the scheduling strategy based on the service type is used for indicating that the cloud disk is preferentially scheduled to the target storage cluster that satisfies a service type characteristic of the cloud disk; and the scheduling strategy based on the cloud disk life cycle is used for indicating that the cloud disk that satisfies a life cycle condition is allowed to be scheduled to the target storage cluster.

The scheduling strategy based on the complementary performance characteristic can be a scheduling strategy which selects the target storage cluster according to the complementary performance distribution, which can be used for indicating that the cloud disk is preferentially scheduled to the target storage cluster with complementary performance to the cloud disk. Performance complementation can be understood as performance occupancy complementation. For example, in response to one party (such as the target cloud disk) needs to occupy more storage performance in a certain period of time, the other party (such as the candidate cluster) just occupies less storage performance in this period of time, in other words, the other party can provide more storage performance in this period of time; alternatively, in response to one party (such as the candidate cluster) occupies more storage performance in a certain period of time and can only provide less storage performance to the other party (such as the target cloud disk), the other party just needs to occupy less storage performance in this period of time. At this time, it can be considered that the performance complementation between the two parties is excellent.

The scheduling strategy based on the service type can be a scheduling strategy for evaluating the candidate cluster according to the service type of the target cloud disk and the available resource characteristic of the candidate cluster, which can be used for indicating that the cloud disk is preferentially scheduled to the target storage cluster whose available resource characteristic satisfies the service type characteristic of the cloud disk. The service type can be used to describe the resource occupation of the target cloud disk in response to performing a storage service, such as a bandwidth type or a capacity type.

The scheduling strategy based on the cloud disk life cycle can be a scheduling strategy that determines whether to schedule the cloud disk according to the life cycle of the target cloud disk, which can be used for indicating that the cloud disk that satisfies the life cycle condition is allowed to be scheduled to the target storage cluster, and/or that the cloud disk that does not satisfy the life cycle condition is prohibited from being scheduled. The life cycle condition can be flexibly set as required, and alternatively, the life cycle condition is that the life cycle has a length greater than a preset threshold. The specific value of the preset threshold is not limited.

For example, a plurality of scheduling strategies can be set in the scheduling strategy set in advance, and the scheduling strategies set in the scheduling strategy set can be updated based on the operation of adding, deleting or modifying the scheduling strategies by the staff.

S 103, matching at least one candidate storage cluster from the plurality of candidate storage clusters as a target storage cluster according to the target scheduling strategy, and controlling the target cloud disk to be scheduled to the target storage cluster.

The target storage cluster can be understood as a storage cluster for scheduling the target cloud disk. The number of target storage clusters can be one or more.

In this embodiment, after the target scheduling strategy is determined, the target storage cluster for scheduling the target cloud disk can be matched from a plurality of candidate storage clusters by executing the target scheduling strategy. For example, at least one candidate storage cluster can be selected from a plurality of candidate storage clusters as the target storage cluster according to the target scheduling strategy.

After determining the target storage cluster, the target cloud disk can be controlled to be scheduled to the target storage cluster. For example, in response to the scheduling instruction being a first scheduling instruction, the target cloud disk can be created in the target storage cluster. In response to the scheduling instruction is a second scheduling instruction, the target cloud disk can be migrated from the current storage cluster where the target cloud disk is located to the target storage cluster.

In some embodiments, the scheduling strategy based on the cloud disk life cycle can be used in the scene in which a secondary scheduling is performed on the cloud disk. For example, in the scene in which a primary scheduling is performed on the cloud disk, the scheduling strategy based on the cloud disk life cycle may not be used to ensure that a cloud disk can be created for the cloud service tenant to use. In the scene in which the secondary scheduling is performed on the cloud disk, the scheduling strategy based on the cloud disk life cycle can be used to avoid a large amount of invalid secondary scheduling.

Alternatively, the life cycle condition is that the life cycle has a length greater than a preset threshold, and in response to the scheduling instruction being a second scheduling instruction and the target scheduling strategy being the scheduling strategy based on the cloud disk life cycle, matching at least one candidate storage cluster from the plurality of candidate storage clusters as the target storage cluster according to the target scheduling strategy, and controlling the target cloud disk to be scheduled to the target storage cluster, includes: in response to the life cycle of the target cloud disk having a length greater than the preset threshold, matching at least one candidate storage cluster from the plurality of candidate storage clusters as the target storage cluster according to the traffic characteristic of the target cloud disk, and controlling the target cloud disk to be scheduled to the target storage cluster; and in response to the life cycle of the target cloud disk having a length less than or equal to the preset threshold, keeping a storage cluster to which the target cloud disk belongs unchanged.

The life cycle length can be understood as the duration of the target cloud disk, which can be predicted based on the historical life cycle length of the cloud disk historically created by the cloud service tenant corresponding to the target cloud disk. The preset threshold can be set as required. The specific value of the preset threshold is not limited in this embodiment.

Specifically, after receiving the scheduling instruction of the target cloud disk, it can be judged whether the scheduling instruction is a second scheduling instruction. In response to the scheduling instruction being a second scheduling instruction, for each target cloud disk corresponding to the scheduling instruction, the target scheduling strategy can be matched from the scheduling strategy set based on the traffic characteristic of the target cloud disk and the traffic characteristic of each of a plurality of candidate clusters. In response to the matched target scheduling strategy includes a scheduling strategy based on the cloud disk life cycle, it can be further judged whether the life cycle of the target cloud disk has a length greater than a preset threshold. In response to the life cycle of the target cloud disk having a length greater than the preset threshold, at least one candidate storage cluster is matched from a plurality of candidate storage clusters as the target storage cluster according to the traffic characteristic of the target cloud disk and the traffic characteristic of each candidate storage cluster, and the target cloud disk is scheduled to the target storage cluster. In response to the life cycle of the target cloud disk having a length not greater than the preset threshold, the secondary scheduling of the target cloud disk is prohibited, that is, the secondary scheduling is not performed on the target cloud disk, that is, the storage cluster where the target cloud disk is located is kept unchanged.

In addition, in response to the received scheduling instruction is the first scheduling instruction, a target scheduling strategy can be matched from a plurality of scheduling strategies except the scheduling strategies based on the cloud disk life cycle in the scheduling strategy set based on the traffic characteristic of the target cloud disk and the traffic characteristic of each of a plurality of candidate clusters, at least one candidate storage cluster can be matched from the plurality of candidate storage clusters as the target storage cluster according to the target scheduling strategy, and the target cloud disk can be controlled to be scheduled to the target storage cluster.

The resource scheduling method based on the cloud storage system according to this embodiment, which includes: obtaining a traffic characteristic of a target cloud disk and a traffic characteristic of each of a plurality of candidate storage clusters in response to a scheduling instruction of the target cloud disk; matching a target scheduling strategy from a preset scheduling strategy set according to the traffic characteristic of the target cloud disk and the traffic characteristic of each of the plurality of candidate storage clusters; matching at least one candidate storage cluster from the plurality of candidate storage clusters as a target storage cluster according to the target scheduling strategy, and controlling the target cloud disk to be scheduled to the target storage cluster. In this embodiment, by using the above technical scheme, a scheduling strategy that is matched with the traffic characteristic of the cloud disk and the traffic characteristic of the candidate storage cluster is used to determine the storage cluster to which the cloud disk is scheduled, which can schedule the cloud disk in a targeted manner, so as to prevent the resource consumption of the cloud service tenant in the same storage cluster from exceeding the upper limit of the storage cluster carrying capacity and improve the performance balance degree between storage clusters.

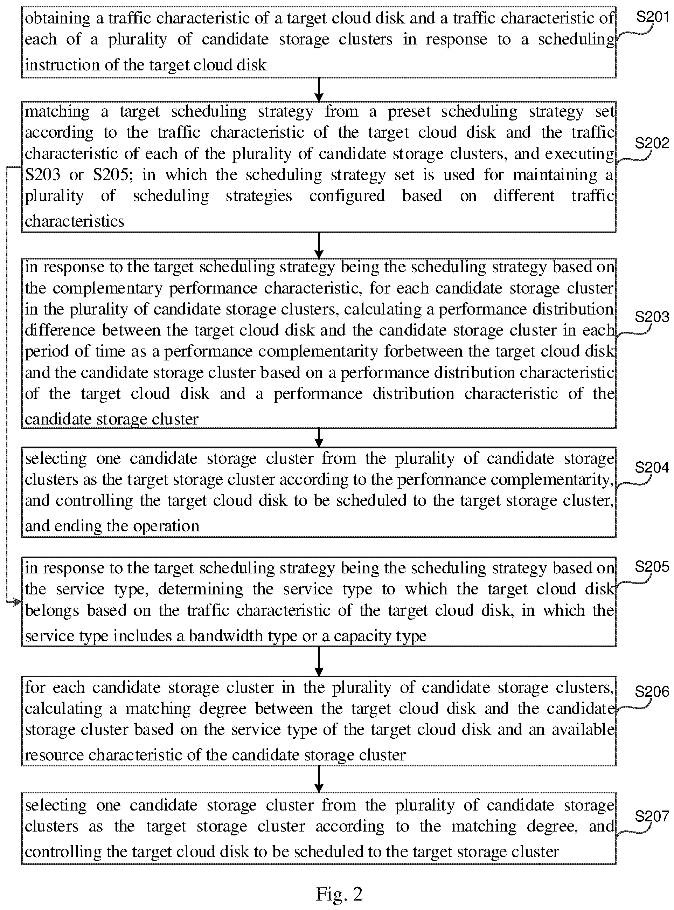

Fig. 2 is a flowchart of another resource scheduling method based on a cloud storage system provided by an embodiment of the present disclosure. The scheme in this embodiment can be combined with one or more alternative schemes in the above embodiment. Alternatively, in response to the target scheduling strategy being the scheduling strategy based on the complementary performance characteristic, matching at least one candidate storage cluster from the plurality of candidate storage clusters as the target storage cluster according to the target scheduling strategy, and controlling the target cloud disk to be scheduled to the target storage cluster, includes: for each candidate storage cluster in the plurality of candidate storage clusters, calculating a performance distribution difference between the target cloud disk and the candidate storage cluster in each period of time as a performance complementarity for the target cloud disk and the candidate storage cluster based on a performance distribution characteristic of the target cloud disk and a performance distribution characteristic of the candidate storage cluster; selecting one candidate storage cluster from the plurality of candidate storage clusters as the target storage cluster according to the performance complementarity, and controlling the target cloud disk to be scheduled to the target storage cluster.

Alternatively, in response to the target scheduling strategy being the scheduling strategy based on the service type, matching at least one candidate storage cluster from the plurality of candidate storage clusters as a target storage cluster according to the target scheduling strategy, and controlling the target cloud disk to be scheduled to the target storage cluster, includes: determining the service type to which the target cloud disk belongs based on the traffic characteristics of the target cloud disk, in which the service type includes a bandwidth type or a capacity type; for each candidate storage cluster in the plurality of candidate storage clusters, calculating a matching degree between the target cloud disk and the candidate storage cluster based on the service type of the target cloud disk and an available resource characteristic of the candidate storage cluster; and selecting one candidate storage cluster from the plurality of candidate storage clusters as the target storage cluster according to the matching degree, and controlling the target cloud disk to be scheduled to the target storage cluster.

Accordingly, as shown in Fig. 2, the resource scheduling method based on the cloud storage system provided by this embodiment includes:
S201, obtaining a traffic characteristic of a target cloud disk and the traffic characteristic of each of a plurality of candidate storage clusters in response to a scheduling instruction of the target cloud disk.
S202, matching a target scheduling strategy from a preset scheduling strategy set according to the traffic characteristic of the target cloud disk and the traffic characteristic of each of the plurality of candidate storage clusters, and executing S203 or S205; in which the scheduling strategy set is used for maintaining a plurality of scheduling strategies configured based on different traffic characteristics.
S203, in response to the target scheduling strategy being the scheduling strategy based on the complementary performance characteristic, for each candidate storage cluster in the plurality of candidate storage clusters, calculating a performance distribution difference between the target cloud disk and the candidate storage cluster in each period of time as a performance complementarity for the target cloud disk and the candidate storage cluster based on a performance distribution characteristic of the target cloud disk and a performance distribution characteristic of the candidate storage cluster.

The performance complementarity between the target cloud disk and the candidate storage cluster can be used to characterize the performance distribution difference between the target cloud disk and the candidate storage cluster. The higher the performance complementarity, the greater the performance distribution difference between the target cloud disk and the candidate storage cluster.

Specifically, in response to the target scheduling strategy is the scheduling strategy based on the complementary performance characteristic, for each candidate storage cluster, a performance distribution difference between the target cloud disk and the candidate storage cluster can be calculated as the performance complementarity between the target cloud disk and the candidate storage cluster according to the performance distribution characteristic of the target cloud disk and the performance distribution characteristic of the candidate storage cluster.

For example, for each period of time in a preset performance distribution period, the performance distribution difference between the target cloud disk and the candidate storage cluster in this period of time can be calculated according to the performance distribution characteristic of the target cloud disk in this period of time and the performance distribution characteristic of the candidate storage cluster in this period of time. The performance distribution difference can include a bandwidth distribution difference and/or an input/output distribution difference. Taking the bandwidth distribution difference as an example, the absolute value of the difference between the bandwidth occupied by the target cloud disk in this period of time and the bandwidth occupied by the candidate storage cluster in this period of time can be calculated as the bandwidth distribution difference between the target cloud disk and the candidate storage cluster in this period of time.

After calculating the performance distribution difference between the target cloud disk and the candidate storage cluster in each period of time, the average value of the performance distribution difference in each period of time can be calculated and normalized. For example, the average value is normalized within the interval [0, 1] to obtain the performance complementarity between the target cloud disk and the candidate storage cluster.

It can be understood that the performance complementarity can also be calculated by other calculation methods, as long as the performance distribution complementation between the target cloud disk and the candidate storage cluster can be described. Exemplarily, in some alternative embodiments, the performance complementarity can be calculated according to the similarity. For example, the performance distribution characteristic vector of the target cloud disk can be generated according to the performance distribution characteristic of the target cloud disk, and the performance distribution characteristic vector of the candidate storage cluster can be generated according to the performance distribution characteristic of the candidate storage cluster. The similarity between the performance distribution characteristic vector of the target cluster and the performance distribution characteristic vector of the candidate storage cluster is calculated, and the reciprocal is taken. For example, the reciprocal is further normalized within the interval [0, 1] to obtain the performance complementarity between the target cloud disk and the candidate storage cluster.

S204, selecting one candidate storage cluster from the plurality of candidate storage clusters as the target storage cluster according to the performance complementarity, and controlling the target cloud disk to be scheduled to the target storage cluster, and ending the operation.

In this embodiment, after obtaining the performance complementarity between each candidate storage cluster and the target cloud disk, at least one candidate storage cluster can be selected from a plurality of candidate storage clusters as the target storage cluster according to the performance complementarity, and the target cloud disk can be controlled to be scheduled to the target storage cluster.

The manner in which the target storage cluster is selected according to the performance complementarity is not limited.

In some examples, at least two candidate storage clusters can be selected according to the performance complementarity. For example, a preset number of candidate storage clusters are selected as the at least two candidate storage clusters according to a decreasing order of the performance complementarities, or storage clusters with the performance complementarities greater than a preset complementarity threshold are selected as the at least two candidate storage clusters. A candidate storage cluster is then randomly selected from the at least two candidate storage clusters as the target storage cluster. For example, a candidate storage cluster is randomly selected from the at least two candidate storage clusters as the target storage cluster according to the same selection weight or by taking the performance complementarity as the selection weight of the corresponding candidate storage cluster. After selecting the target storage cluster, the target cloud disk can be controlled to be scheduled to the target storage cluster. The preset number and the preset complementarity threshold can be set as required, which is not limited in this embodiment.

In other examples, the candidate storage cluster with the highest performance complementarity can be selected as the target storage cluster, and the target cloud disk can be controlled to be scheduled to the target storage cluster.

S205, in response to the target scheduling strategy being the scheduling strategy based on the service type, determining the service type to which the target cloud disk belongs based on the traffic characteristic of the target cloud disk, in which the service type includes a bandwidth type or a capacity type.

The service type of the target cloud disk may be the type of a storage service executed by the target cloud disk. The service type of the target cloud disk can include a bandwidth type or a capacity type. The bandwidth type can be understood as that the target cloud disk needs to occupy more bandwidth and less capacity, that is, the bandwidth utilization rate is high and the capacity utilization rate is low. The capacity type can be understood as that the target cloud disk needs to occupy more capacity and less bandwidth, that is, the capacity utilization rate is high and the bandwidth utilization rate is low.

In this embodiment, in response to the target scheduling strategy is a scheduling strategy based on the service type, a service type to which the target cloud disk belongs can be determined based on the traffic characteristic of the target cloud disk.

The manner in which the service type of the target cloud disk is determined is not limited, which may be set specifically as required.

For example, in response to the scheduling instruction of the target cloud disk being the first scheduling instruction, the life cycle length and the performance distribution characteristic of the target cloud disk can be predicted, and the service type to which the target cloud disk belongs can be determined based on the life cycle length and the performance distribution characteristic of the target cloud disk.

Specifically, in response to the life cycle of the target cloud disk has a length less than or equal to the preset threshold, it can be determined that the target cloud disk is a cloud disk with a short life cycle, and the cloud disk with a short life cycle generally needs to occupy more bandwidth resources during its existence, therefore, the service type of the target cloud disk can be determined as a bandwidth type at this time. In response to the life cycle of the target cloud disk having a length greater than the preset threshold, it can be determined that the target cloud disk is a cloud disk with a long life cycle. At this time, it can be predicted whether the target cloud disk needs to occupy more capacity or occupy more capacity bandwidth according to the performance traffic characteristic of the target cloud disk, and then the service type to which the target cloud disk belongs can be determined.

In response to the scheduling instruction of the target cloud disk is a second scheduling instruction, the life cycle length of the target cloud disk can be predicted. In response to the life cycle of the target cloud disk has a length less than or equal to a preset threshold, it can be determined that the target cloud disk is a cloud disk with a short life cycle, the secondary scheduling is not performed on the target cloud disk, and subsequent operations are not performed. In response to the life cycle of the target cloud disk has a length greater than the preset threshold, it can be determined that the target cloud disk is a cloud disk with a long life cycle. At this time, it can be predicted whether the target cloud disk needs to occupy more capacity or occupy more bandwidth according to the performance traffic characteristic of the target cloud disk, and then the service type to which the target cloud disk belongs can be determined.

S206, for each candidate storage cluster in the plurality of candidate storage clusters, calculating a matching degree between the target cloud disk and the candidate storage cluster based on the service type of the target cloud disk and an available resource characteristic of the candidate storage cluster.

The available resource characteristic can be understood as the characteristic of available resource. For example, the available resource characteristic can be used to describe the amount of available bandwidth resources and available capacity resources, such as the size of available bandwidth resources and the size of available capacity resources and/or the relative size therebetween.

Specifically, for each candidate storage cluster, a matching degree between the target cloud disk and the candidate storage cluster can be calculated based on the service type of the target cloud disk and the available resource characteristic of the candidate storage cluster.

Exemplarily, in response to the service type of the target cloud disk being a bandwidth type, the matching degree can be determined based on the available bandwidth resource of the candidate storage cluster, so as to select the candidate storage cluster with more available bandwidth resources as the target storage cluster, thereby scheduling the target cloud disk to the storage cluster with more available bandwidth resources. In the case where the service type of the target cloud disk is a capacity type, the matching degree can be determined based on the available capacity resource of the candidate storage cluster, so as to select the candidate storage cluster with more available capacity resources as the target storage cluster, thereby scheduling the target cloud disk to the cluster with more available capacity resources.

S207, selecting one candidate storage cluster from the plurality of candidate storage clusters as the target storage cluster according to the matching degree, and controlling the target cloud disk to be scheduled to the target storage cluster.

In this embodiment, after obtaining the matching degree between each candidate storage cluster and the target cloud disk, at least one candidate storage cluster can be selected from a plurality of candidate storage clusters as the target storage cluster according to the matching degree, and the target cloud disk can be controlled to be scheduled to the target storage cluster.

The manner in which the target storage cluster is selected according to the matching degree is not limited.

In some examples, at least two candidate storage clusters can be selected according to the matching degree. For example, a preset number of candidate storage clusters are selected as the at least two candidate storage clusters according to a decreasing order of the matching degrees, or storage clusters with the matching degrees greater than a preset matching degree threshold are selected as the at least two candidate storage clusters. A candidate storage cluster is then randomly selected from the at least two candidate storage clusters as the target storage cluster. For example, one candidate storage cluster is randomly selected from the at least two candidate storage clusters as the target storage cluster according to the same selection weight or by taking the matching degree as the selection weight of the corresponding candidate storage cluster. After selecting the target storage cluster, the target cloud disk can be controlled to be scheduled to the target storage cluster. The preset matching degree threshold can be set as required, which is not limited in this embodiment.

In other examples, the candidate storage cluster with the highest matching degree can be selected as the target storage cluster, and the target cloud disk can be controlled to be scheduled to the target storage cluster.

It should be noted that the number of target scheduling strategies can be one or more, that is, one target scheduling strategy can be used to select the target storage cluster, and a plurality of scheduling strategies can also be used to select the target storage cluster. In response to a plurality of scheduling strategies are used to select the target storage cluster, each scheduling strategy can be used to evaluate the candidate storage cluster, and the evaluation value (such as the performance complementarity and/or the matching degree) of each scheduling strategy for the candidate storage cluster can be obtained. According to the preset weight of each scheduling strategy, the weighted average of the evaluation values calculated by each candidate strategy can be calculated as the recommendation degree of the candidate storage cluster, and one candidate storage cluster can be selected from the plurality of candidate storage clusters as the target storage cluster according to the recommendation degree.

In an alternative embodiment, both the traffic characteristic of the cloud disk and the traffic characteristic of the storage cluster can be presented in the form of portraits. Portrait refers to a series of labels established based on a large number of offline and/or online data, which are used to depict a basic attribute, statistical data and/or a behavior habit of a subject (such as a cloud disk and/or a storage cluster). In this embodiment, the portrait can consist of three parts: entity type, portrait name and portrait value.

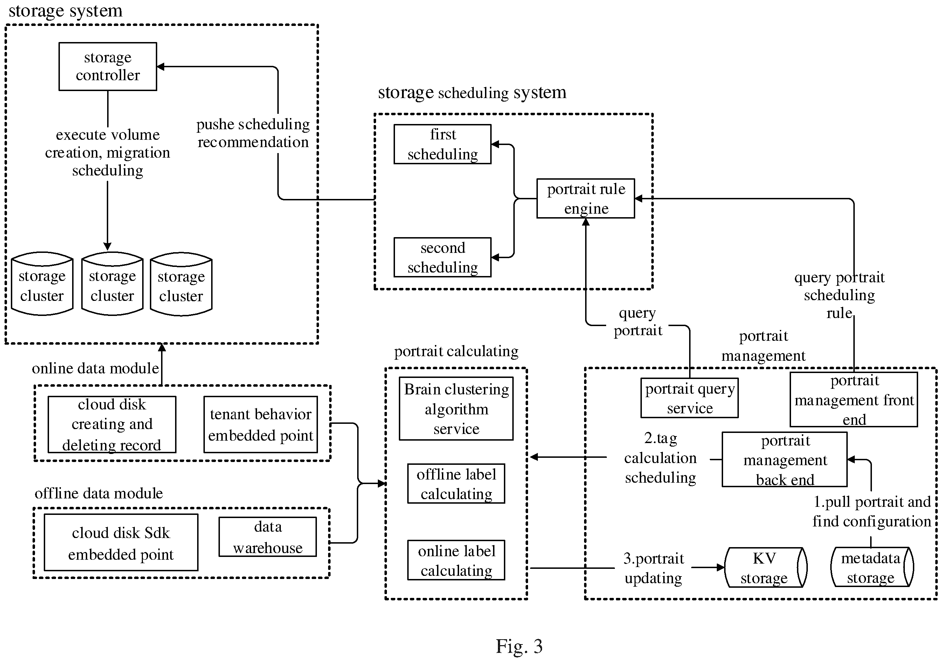

Fig. 3 is an architecture diagram of a portrait and scheduling system provided by an embodiment of the present disclosure. The portrait management front end can be used to visually display portrait metadata (such as portrait basic information and calculation logic), a portrait scheduling strategy, a portrait scheduling effect display (such as portrait scheduling effect analysis based on comparison), and a portrait scheduling strategy management service (recording a certain scheduling method for certain a portrait).

A portrait query service can be used to provide a portrait key-value (KV) query interface. The portrait management back end can provide portrait tag calculation task management, which is used to issue and cancel the tag calculation task in response to the change of portrait metadata.

A KV storage database can be used to record a portrait tag and a characteristic value. A metadata storage database can be used to record the basic information and the calculation method of the portrait tag.

A portrait calculating module can contain various predefined portrait characteristic value calculation logics. For example, the clustering algorithm service is used to find cloud disks and storage clusters with similar traffic characteristics, the statistical strategies are used to calculate the survival time (that is, the life cycle length) of the tenant-owned cloud disks, and so on.

An online data module and an offline data module can include an offline data warehouse (used for the resource consumption of the storage cluster, a multi-protected tenant and/or a dedicated storage cluster, etc.), tenant-related embedded point information of the storage controller (such as the creating and deleting frequency for obtaining the historical cloud disk of the tenant, etc.), and cloud disk Software Development Kit (SDK) embedded point information (for example, for obtaining the storage consumption and/or the performance consumption of the cloud disk, etc.).

A portrait rule engine can be used to parse the matched scheduling strategy according to the input portrait scheduling strategy and scheduling context (that is, portraits), and deliver the calculation of the primary scheduling and the second scheduling to execute the scheduling recommendation.

A primary scheduling module can be used to select the back-end storage cluster in response to the cloud disk is created.

A secondary scheduling can be used to select a batch of cloud disks from the created cloud disks to be migrated from the original storage cluster to the destination storage cluster.

By using the portrait and scheduling system, this embodiment can acquire the online and offline data such as the creation and deletion frequency of the historical cloud disks of tenants and the storage cluster operation data warehouse, calculate, aggregate and find the portraits. The portrait SDK is provided for real-time query of the characteristic values of the designated portrait of the depicting subject. Moreover, the scheduling algorithm will perform targeted scheduling based on different portraits. For example, in the primary scheduling, the portraits of the creation and deletion characteristics and the business model characteristics of the cloud disks are obtained, and the bandwidth type (a high bandwidth utilization rate and a low capacity utilization rate) or the capacity type (a high capacity utilization rate and a low bandwidth utilization rate) is identified, and the cloud disk is scheduled to the storage cluster with a large bandwidth margin or a large capacity margin. In the secondary scheduling, the life cycle portrait of the cloud disk is obtained. The scheduling is not performed for the portrait with a short life cycle. The traffic characteristic portrait of the cloud disk and the traffic characteristic portrait of the storage cluster are obtained. The performance complementarity is calculated according to the portrait value, so that the performance of the storage cluster is made full use of.

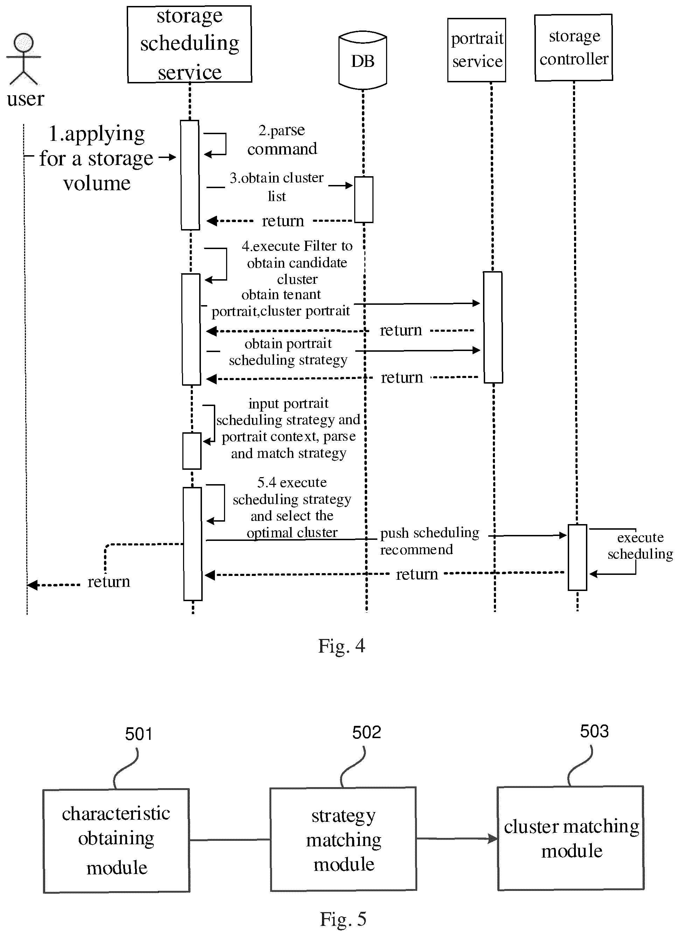

Taking the primary scheduling of a cloud disk as an example, Fig. 4 is a schematic diagram of a primary scheduling process of a cloud disk provided by an embodiment of the present disclosure. As shown in Fig. 4, the primary scheduling process of the cloud disk can be described as follows.

A1. The user calls the interface for applying for a storage volume, and the application strategy will be specified in the interface, such as an affinity strategy of the network group, an anti-affinity strategy of the disaster tolerance group, and the applied amount of resources (such as the capacity, the bandwidth, the IOPS, etc.).

A2. After receiving the application command (that is, the primary scheduling command), the storage scheduling service in the storage scheduling system parses the application strategy delivered by the user and delivers the application strategy to a filter layer for filtering the storage cluster.

A3. The filter layer obtains all the storage cluster lists from the DB database, and filters the storage cluster lists to obtain a candidate storage cluster.

A4. The storage scheduling service obtains all the portraits of the storage volume (that is, the cloud disk) created in this application and all the portraits of the candidate storage cluster of the storage volume created this time from the portrait service.

A5. The storage scheduling service obtains an effective portrait-based scheduling strategy from the portrait service.

A6. The storage scheduling service inputs all the portraits (including the portraits of the cloud disk and the portraits of the candidate storage cluster) and the portrait scheduling strategies into the portrait strategy engine, and matches the scheduling strategies to obtain the matched scheduling strategies.

A7. The storage scheduling service executes the scheduling strategy determined by matching, obtains the recommended ranking (that is, the ranking of at least two selected candidate storage clusters), and pushes the scheduling strategy to the storage controller of the storage control system, and the storage controller executes scheduling based on the recommended ranking. For example, the storage controller can randomly select a candidate storage cluster as the target storage cluster based on the recommended ranking and create the storage volume created in this application in the target storage cluster.

A8. The storage scheduling service returns the creation result of the storage volume to the user.

The portrait scheduling strategy can be understood as a combined strategy of the portrait matching strategy and the scheduling strategy. That is, in response to the characteristic value of the portrait of the depicting subject satisfy a certain condition, a certain scheduling strategy is used. For example, the scheduling strategy can include but is not limited to the strategy of "separating storage volumes with similar business models" (that is, the scheduling strategy based on the complementary performance characteristic), the strategy of "prohibiting secondary scheduling of the storage volume with a short life cycle" (that is, the scheduling strategy based on the cloud disk life cycle) and/or the strategy of "targeted scheduling of capacity-type/bandwidth-type storage volumes" (that is, the scheduling strategy based on the business characteristic) and so on. A storage cluster is a group of servers that provide the user with a storage resource as a whole. The storage volume, also referred to as the cloud disk, can be used as the basic unit for the user to apply for the storage resource and provide an external service. The capacity of the cloud disk can be understood as the size of storage volume applied by the user, usually in unit of GB or TB.

The resource scheduling method based on the cloud storage system according to this embodiment can solve the inefficient scheduling problem resulted from the inability to perceive the user business model in the traditional storage system. This embodiment can achieve the following technical effects by using the above technical scheme.
1) Flexible management of portrait: the portrait, a portrait rule, a portrait scheduling rule and a portrait scheduling effect are visually displayed through the portrait management front end in the portrait management platform. The staff can manage the displayed content, such as adding, deleting or modifying, so that the portrait is managed in a unified portrait management platform, including managing the portrait, calculating the portrait, managing the portrait strategy, thermally updating the portrait scheduling strategy, and tracking a portrait scheduling effect.
2) Load balancing of performance: in this embodiment, the business models of storage volumes, storage clusters and tenants are calculated through a clustering algorithm. The volumes, storage clusters and tenants with similar business models can be dispersed through the scheduling strategies based on the complementary performance characteristics and/or the scheduling strategies based on the service type during volume creation scheduling and secondary scheduling, which can effectively improve the performance balance degree between storage clusters.
3) Efficient scheduling: secondary scheduling can filter the storage volume with a short life cycle through the scheduling strategy based on the cloud disk life cycle, and avoid a large amount of invalid scheduling.
4) Balanced scheduling: for targeted scheduling of capacity-type and bandwidth-type volumes, storage volumes with similar business models are separated from storage clusters, which can greatly improve the water level balance degree between storage clusters and support the safe operation of a higher water level.

Therefore, intelligent and efficient storage resource scheduling can be realized.

Fig. 5 is a structural block diagram of a resource scheduling apparatus based on a cloud storage system provided by an embodiment of the present disclosure. The apparatus can be configured in a storage scheduling system. For example, the apparatus can be implemented by software and/or hardware and can be configured in an electronic device in the storage scheduling system, for example, a mobile phone or a tablet computer. The storage resource can be scheduled by executing the resource scheduling method based on the cloud storage system. For example, primary scheduling or secondary scheduling is performed on the cloud disk.

As shown in Fig. 5, the resource scheduling apparatus based on the cloud storage system provided by the embodiment may include a characteristic obtaining module 501, a strategy matching module 502 and a cluster matching module 503, in which
the characteristic obtaining module 501 is configured to obtain a traffic characteristic of a target cloud disk and the traffic characteristic of each of a plurality of candidate storage clusters in response to a scheduling instruction of the target cloud disk;
the strategy matching module 502 is configured to match a target scheduling strategy from a preset scheduling strategy set according to the traffic characteristic of the target cloud disk and the traffic characteristic of each of the plurality of candidate storage clusters; in which the scheduling strategy set is used for maintaining a plurality of scheduling strategies configured based on different traffic characteristics;
the cluster matching module 503 is configured to match at least one candidate storage cluster from the plurality of candidate storage clusters as a target storage cluster according to the target scheduling strategy, and control the target cloud disk to be scheduled to the target storage cluster.

According to the resource scheduling apparatus based on the cloud storage system according to the embodiment, the characteristic obtaining module obtains the traffic characteristic of the target cloud disk and the traffic characteristic of each of a plurality of candidate storage clusters in response to a scheduling instruction of the target cloud disk; the strategy matching module matches a target scheduling strategy from a preset scheduling strategy set according to the traffic characteristic of the target cloud disk and the traffic characteristic of each of the plurality of candidate storage clusters; the cluster matching module matches at least one candidate storage cluster from the plurality of candidate storage clusters as a target storage cluster according to the target scheduling strategy, and controls the target cloud disk to be scheduled to the target storage cluster. In this embodiment, by using the above technical scheme, a scheduling strategy that is matched with the traffic characteristic of the cloud disk and the traffic characteristic of the candidate storage cluster is used to determine the storage cluster to which the cloud disk is scheduled, which can schedule the cloud disk in a targeted manner, so as to prevent the resource consumption of the cloud service tenant in the same storage cluster from exceeding the upper limit of the storage cluster carrying capacity and improve the performance balance degree between storage clusters.

Alternatively, the characteristic obtaining module 501 includes: an instruction generating unit, which is configured to generate a first scheduling instruction of the target cloud disk in response to a request for creating the target cloud disk initiated by a cloud service tenant; and a first characteristic obtaining unit, which is configured to obtain traffic characteristic of a historical cloud disk of the cloud service tenant as the traffic characteristic of the target cloud disk and obtain the traffic characteristic of each of the plurality of candidate storage clusters in response to the first scheduling instruction of the target cloud disk.

Alternatively, the characteristic obtaining module 501 includes: a state detection unit, which is configured to detect an operating state of a current storage cluster, and in response to the operating state satisfying a scheduling condition, initiate a second scheduling instruction for the target cloud disk which has been created and operated in the current storage cluster; and a second characteristic obtaining unit, which is configured to obtain the traffic characteristic of the target cloud disk and obtain the traffic characteristic of each of the plurality of candidate storage clusters in response to the second scheduling instruction for the target cloud disk.

Further, the resource scheduling apparatus based on the cloud storage system may further include: a characteristic maintaining module, which is configured to dynamically maintain the traffic characteristic of a cloud disk created by each cloud service tenant and the traffic characteristic of each storage cluster in the cloud storage system, in which the traffic characteristic of the cloud disk includes a performance distribution characteristic and/or a life cycle characteristic; and the traffic characteristic of the storage cluster includes the performance distribution characteristic and/or an available resource characteristic.

Further, the resource scheduling apparatus based on the cloud storage system may further include: a strategy maintaining module, which is configured to dynamically maintain the scheduling strategy set, in which the scheduling strategy set at least includes any one or more of a scheduling strategy based on a complementary performance characteristic, a scheduling strategy based on a service type and a scheduling strategy based on a cloud disk life cycle; in which the scheduling strategy based on the complementary performance characteristic is used for indicating that the cloud disk is preferentially scheduled to the target storage cluster with complementary performance to the cloud disk; the scheduling strategy based on the service type is used for indicating that the cloud disk is preferentially scheduled to the target storage cluster that satisfies a service type characteristic of the cloud disk; and the scheduling strategy based on the cloud disk life cycle is used for indicating that the cloud disk that satisfies a life cycle condition is allowed to be scheduled to the target storage cluster.

Alternatively, the cluster matching module 503 includes a complementarity calculating unit, which is configured to, in response to the target scheduling strategy being the scheduling strategy based on the complementary performance characteristic, for each candidate storage cluster in the plurality of candidate storage clusters, calculate a performance distribution difference between the target cloud disk and the candidate storage cluster in each period of time as a performance complementarity for the target cloud disk and the candidate storage cluster based on a performance distribution characteristic of the target cloud disk and the performance distribution characteristic of the candidate storage cluster; a first cluster selecting unit, which is configured to select one candidate storage cluster from the plurality of candidate storage clusters as the target storage cluster according to the performance complementarity, and control the target cloud disk to be scheduled to the target storage cluster.

Alternatively, the cluster matching module 503 includes a type determining unit, which is configured to, in response to the target scheduling strategy being the scheduling strategy based on the service type, determine the service type to which the target cloud disk belongs based on the traffic characteristic of the target cloud disk, in which the service type includes a bandwidth type or a capacity type; a matching degree calculating unit, which is configured to, for each candidate storage cluster in the plurality of candidate storage clusters, calculate a matching degree between the target cloud disk and the candidate storage cluster based on the service type of the target cloud disk and an available resource characteristic of the candidate storage cluster; and a second cluster selecting unit, which is configured to select one candidate storage cluster from the plurality of candidate storage clusters as the target storage cluster according to the matching degree, and control the target cloud disk to be scheduled to the target storage cluster.

Alternatively, the life cycle condition is that the life cycle has a length greater than a preset threshold. The cluster matching module 503 includes a life cycle determining module, which is configured to, in response to the scheduling instruction being a second scheduling instruction and the target scheduling strategy being the scheduling strategy based on the cloud disk life cycle, in response to the life cycle of the target cloud disk having a length greater than the preset threshold, match at least one candidate storage cluster from the plurality of candidate storage clusters the target storage cluster according to the traffic characteristic of the target cloud disk, and control the target cloud disk to be scheduled to the target storage cluster; and in response to the life cycle of the target cloud disk having a length less than or equal to the preset threshold, keeping a storage cluster to which the target cloud disk belongs unchanged.

The resource scheduling apparatus based on the cloud storage system according to the embodiment of the present disclosure can execute the resource scheduling method based on the cloud storage system provides by any embodiment of the present disclosure, and has functional modules and beneficial effects corresponding to the resource scheduling method based on the cloud storage system. For technical details that are not described in detail in this embodiment, refer to the resource scheduling method based on the cloud storage system according to any embodiment of the present disclosure.

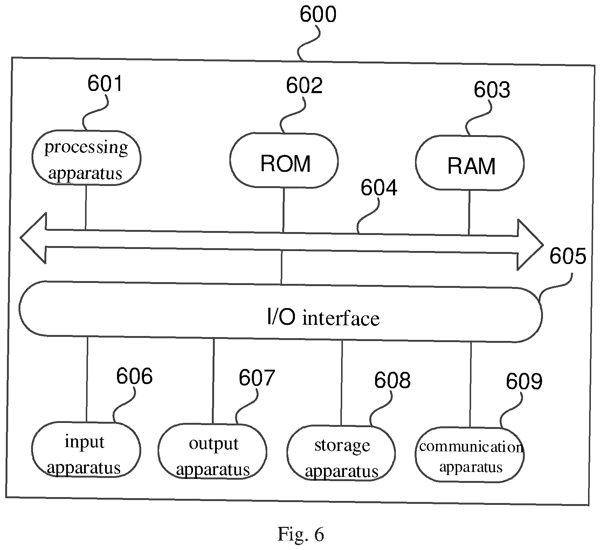

Reference is made to Fig. 6, which shows a structural schematic diagram of an electronic device (such as a terminal device or a server) 600 suitable for implementing the embodiment of the present disclosure. A terminal device in the embodiment of the present disclosure may include but not limited to a mobile terminal such as a mobile phone, a notebook computer, a digital radio broadcasting receiver, a personal digital assistant (PDA), a portable android device (PAD), a portable multimedia player (PMP), a vehicle terminal (such as a vehicle navigation terminal), and a fixed terminal such as a digital television (TV) and a desktop computer. The electronic device shown in Fig. 6 is only an example and should not impose any limitations on the functions and usage scopes of the embodiments of the present disclosure.

As shown in Fig. 6, the electronic device 600 may include a processing apparatus (such as a central processing unit, a graphics processor, and the like) 601, which may execute various appropriate actions and processes according to a program stored in a read-only memory (ROM) 602 or a program loaded from a storage apparatus 608 to a random-access memory (RAM) 603. In the RAM 603, various programs and data required for operations of the electronic device 600 are further stored. The processing apparatus 601, the ROM 602, and the RAM 603 are connected to each other by a bus 604. An input/output (I/O) interface 605 is also connected to the bus 604.

Generally, the following apparatuses may be connected to the I/O interface 605: an input apparatus 606 such as a touch screen, a touch pad, a keyboard, a mouse, a camera, a microphone, an accelerometer, a gyroscope, etc.; an output apparatus 607 such as a liquid crystal display (LCD), a loudspeaker, a vibrator, etc.; a storage apparatus 608 such as a magnetic tape, and a hard disk, etc.; and a communication apparatus 609. The communication apparatus 609 may allow the electronic device 600 to perform wireless or wire communication with other devices to exchange data. Although Fig. 6 shows the electronic device 600 with various apparatuses, it should be understood that it is not required to implement or possess all the apparatuses shown. It may implement alternatively or possess the more or less apparatuses.

According to the embodiment of the present disclosure, the process described above with reference to the flowcharts may be achieved as a computer software program. For example, an embodiment of the present disclosure includes a computer program product, the computer program product includes a computer program loaded on a non-transitory computer-readable medium, and the computer program contains program codes for executing the method shown in the flowcharts. In such an embodiment, the computer program may be downloaded and installed from the network by the communication apparatus 609, or installed from the storage apparatus 608, or installed from ROM 602. When the computer program is executed by the processing apparatus 601, the above functions in the method in the embodiments of the present disclosure are executed.

It should be noted that the computer-readable medium mentioned above in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, device or device, or any combination thereof. More specific examples of the computer-readable storage medium may include, but not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium containing or storing a program that may be used by or in combination with an instruction execution system, device or device. In the present disclosure, the computer-readable signal medium may include a data signal propagated in a baseband or as a part of a carrier wave, in which computer-readable program codes are carried. This propagated data signal may take multiple forms, including but not limited to an electromagnetic signal, an optical signal or any suitable combination of the above. The computer-readable signal medium may also be any computer-readable medium other than the computer-readable storage medium, and may send, propagate or transmit a program used by or in combination with an instruction execution system, device or device. The program codes contained on the computer-readable medium may be transmitted by any suitable medium, including but not limited to: an electric wire, a fiber-optic cable, radio frequency (RF) and the like, or any suitable combination of the above.

In some implementation methods, a client and the server can communicate by using any currently known or future developed network protocol such as a hypertext transfer protocol (HTTP), and may communicate and interconnect with digital data in any form or medium (for example, a communication network). Examples of the communication network include a local area network ("LAN"), a wide area network ("WAN"), the Internet work (for example, the Internet) and an end-to-end network (for example, an ad hoc end-to-end network), as well as any currently known or to be researched and developed in the future.

The above computer-readable medium may be contained in the above electronic device; and it may also exist separately without being assembled into the server.

The above computer-readable medium carries one or more programs, and when the above one or more programs are executed by the electronic device, the electronic device: obtaining a traffic characteristic of a target cloud disk and the traffic characteristic of each of a plurality of candidate storage clusters in response to a scheduling instruction of the target cloud disk; matching a target scheduling strategy from a preset scheduling strategy set according to the traffic characteristic of the target cloud disk and the traffic characteristic of each of the plurality of candidate storage clusters; in which the scheduling strategy set is used for maintaining a plurality of scheduling strategies configured based on different traffic characteristics; matching at least one candidate storage cluster from the plurality of candidate storage clusters as a target storage cluster according to the target scheduling strategy, and controlling the target cloud disk to be scheduled to the target storage cluster.

Computer program codes for performing the operations of the present disclosure may be written in one or more programming languages or a combination thereof, the programming languages include, but are not limited to, object-oriented programming languages such as Java, Smalltalk and C++, and further include conventional procedural programming languages such as "C" programming language or similar programming languages. The program codes may be entirely executed on a user's computer, partially executed on the user's computer, executed as an independent software package, partially executed on the user's computer and partially executed on a remote computer, or entirely executed on the remote computer or a server. In the case involving the remote computer, the remote computer may be connected to the user's computer through any type of network, including a local area network (LAN) or a wide area network (WAN), or may be connected to an external computer (for example, through the Internet using an Internet service provider).

The flowcharts and block diagrams in the accompanying drawings illustrate the architecture, function and operation of possible implementations of the systems, methods and the computer program product according to various embodiments of the present disclosure. In this regard, each block in the flowcharts or block diagrams may represent a module, a program segment, or a part of codes, which includes one or more executable instructions for implementing specified logical functions. It should also be noted that, in some alternative implementations, the functions noted in the blocks may occur out of the order noted in the accompanying drawings. For example, two blocks illustrated in succession may, in fact, be executed substantially in parallel, and may sometimes be executed in a reverse order, depending on the function involved. It should also be noted that, each block in the block diagrams and/or flowcharts, and combinations of blocks in the block diagrams and/or flow diagrams, may be implemented by a dedicated hardware-based system that performs specified functions or operations, or by a combination of dedicated hardware and computer instructions.

The involved modules described in the embodiments of the present disclosure may be implemented by a mode of software, or may be implemented by a mode of hardware. Herein, the name of the unit does not constitute a limitation on the unit itself in a certain situation, for example.

The functions described above in this article may be at least partially executed by one or more hardware logic components. For example, non-restrictive exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a tangible medium that may include or store a program used by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, device or device, or any suitable combination of the above. More specific examples of the machine-readable storage medium may include an electrical connection based on one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

According to one or more embodiments of the present disclosure, example 1 provides a resource scheduling method based on a cloud storage system, which includes:
obtaining a traffic characteristic of a target cloud disk and the traffic characteristic of each of a plurality of candidate storage clusters in response to a scheduling instruction of the target cloud disk;
matching a target scheduling strategy from a preset scheduling strategy set according to the traffic characteristic of the target cloud disk and the traffic characteristic of each of the plurality of candidate storage clusters; wherein the scheduling strategy set is used for maintaining a plurality of scheduling strategies configured based on different traffic characteristics; and
matching at least one candidate storage cluster from the plurality of candidate storage clusters as a target storage cluster according to the target scheduling strategy, and controlling the target cloud disk to be scheduled to the target storage cluster.

According to one or more embodiments of the present disclosure, example 2 according to the method of example 1, obtaining the traffic characteristic of the target cloud disk and the traffic characteristic of each of the plurality of candidate storage clusters in response to the scheduling instruction of the target cloud disk, includes:
generating a first scheduling instruction of the target cloud disk in response to a request for creating the target cloud disk initiated by a cloud service tenant;
in response to the first scheduling instruction of the target cloud disk, obtaining the traffic characteristic of a historical cloud disk of the cloud service tenant as the traffic characteristic of the target cloud disk and obtaining the traffic characteristic of each of the plurality of candidate storage clusters.

According to one or more embodiments of the present disclosure, example 3 according to the method of example 1, obtaining the traffic characteristic of the target cloud disk and the traffic characteristic of each of the plurality of candidate storage clusters in response to the scheduling instruction of the target cloud disk, includes:
detecting an operating state of a current storage cluster, and in response to the operating state satisfying a scheduling condition, initiating a second scheduling instruction for the target cloud disk which has been created and operated in the current storage cluster;
obtaining the traffic characteristic of the target cloud disk and obtaining the traffic characteristic of each of the plurality of candidate storage clusters in response to the second scheduling instruction for the target cloud disk.

According to one or more embodiments of the present disclosure, example 4 according to the method of example 1, the method further includes:
dynamically maintaining the traffic characteristic of a cloud disk created by each cloud service tenant and the traffic characteristic of each storage cluster in the cloud storage system, wherein the traffic characteristic of the cloud disk comprises a performance distribution characteristic and/or a life cycle characteristic; and the traffic characteristic of the storage cluster comprises the performance distribution characteristic and/or an available resource characteristic.

According to one or more embodiments of the present disclosure, example 5 according to the method of any one of examples 1-4, the method further includes:
dynamically maintaining the scheduling strategy set, wherein the scheduling strategy set at least comprises any one or more of a scheduling strategy based on a complementary performance characteristic, a scheduling strategy based on a service type and a scheduling strategy based on a cloud disk life cycle; wherein the scheduling strategy based on the complementary performance characteristic is used for indicating that the cloud disk is preferentially scheduled to the target storage cluster with complementary performance to the cloud disk; the scheduling strategy based on the service type is used for indicating that the cloud disk is preferentially scheduled to the target storage cluster that satisfies a service type characteristic of the cloud disk; and the scheduling strategy based on the cloud disk life cycle is used for indicating that the cloud disk that satisfies a life cycle condition is allowed to be scheduled to the target storage cluster.

According to one or more embodiments of the present disclosure, example 6 according to the method of example 5, in response to the target scheduling strategy being the scheduling strategy based on the complementary performance characteristic, matching at least one candidate storage cluster from the plurality of candidate storage clusters as the target storage cluster according to the target scheduling strategy, and controlling the target cloud disk to be scheduled to the target storage cluster, includes:
for each candidate storage cluster in the plurality of candidate storage clusters, calculating a performance distribution difference between the target cloud disk and the candidate storage cluster in each period of time as a performance complementarity for the target cloud disk and the candidate storage cluster based on a performance distribution characteristic of the target cloud disk and the performance distribution characteristic of the candidate storage cluster;
selecting one candidate storage cluster from the plurality of candidate storage clusters as the target storage cluster according to the performance complementarity, and controlling the target cloud disk to be scheduled to the target storage cluster.

According to one or more embodiments of the present disclosure, example 7 according to the method of example 5, in response to the target scheduling strategy being the scheduling strategy based on the service type, matching at least one candidate storage cluster from the plurality of candidate storage clusters as the target storage cluster according to the target scheduling strategy, and controlling the target cloud disk to be scheduled to the target storage cluster, includes:
determining the service type to which the target cloud disk belongs based on the traffic characteristic of the target cloud disk, wherein the service type comprises a bandwidth type or a capacity type;
for each candidate storage cluster in the plurality of candidate storage clusters, calculating a matching degree between the target cloud disk and the candidate storage cluster based on the service type of the target cloud disk and an available resource characteristic of the candidate storage cluster; and
selecting one candidate storage cluster from the plurality of candidate storage clusters as the target storage cluster according to the matching degree, and controlling the target cloud disk to be scheduled to the target storage cluster.

According to one or more embodiments of the present disclosure, example 8 according to the method of example 5, the life cycle condition is that the life cycle has a length greater than a preset threshold, in response to the scheduling instruction being a second scheduling instruction and the target scheduling strategy being the scheduling strategy based on the cloud disk life cycle, matching at least one candidate storage cluster from the plurality of candidate storage clusters as the target storage cluster according to the target scheduling strategy, and controlling the target cloud disk to be scheduled to the target storage cluster, includes:
in response to the life cycle of the target cloud disk having a length greater than the preset threshold, matching at least one candidate storage cluster from the plurality of candidate storage clusters as the target storage cluster according to the traffic characteristic of the target cloud disk, and controlling the target cloud disk to be scheduled to the target storage cluster;
in response to the life cycle of the target cloud disk having a length less than or equal to the preset threshold, keeping a storage cluster to which the target cloud disk belongs unchanged.

According to one or more embodiments of the present disclosure, example 9 provides a resource scheduling apparatus based on a cloud storage system, which includes:
a characteristic obtaining module, configured to obtain a traffic characteristic of a target cloud disk and the traffic characteristic of each of a plurality of candidate storage clusters in response to a scheduling instruction of the target cloud disk;
a strategy matching module, configured to match a target scheduling strategy from a preset scheduling strategy set according to the traffic characteristic of the target cloud disk and the traffic characteristic of each of the plurality of candidate storage clusters; wherein the scheduling strategy set is used for maintaining a plurality of scheduling strategies configured based on different traffic characteristics; and
a cluster matching module, configured to match at least one candidate storage cluster from the plurality of candidate storage clusters as a target storage cluster according to the target scheduling strategy, and control the target cloud disk to be scheduled to the target storage cluster.

According to one or more embodiments of the present disclosure, example 10 provides an electronic device, includes:
one or more processors;
a memory for storing one or more programs,
when the one or more programs are executed by the one or more processors, the one or more processors are caused to realize the resource scheduling method based on the cloud storage system according to any one of examples 1-8.

According to one or more embodiments of the present disclosure, example 11 provides a computer-readable storage medium, in which a computer instruction is stored on the computer-readable storage medium, and the computer instruction causes a processor, when executed by a processor, causes the processor to implement the resource scheduling method based on the cloud storage system according to any one of examples 1-8.

According to one or more embodiments of the present disclosure, example 12 provides a computer program product, in response to the computer program product being executed by a computer, the computer implements the resource scheduling method based on the cloud storage system according to any one of examples 1-8.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

Furthermore, although various operations are depicted in a particular order, this should not be understood as requiring that these operations be performed in the particular order shown or in a sequential order. Under certain circumstances, multitasking and parallel processing may be beneficial. Likewise, although several specific implementation details are contained in the above discussion, these should not be construed as limiting the scope of the present disclosure. Some features described in the context of separate embodiments can also be combined in a single embodiment. On the contrary, various features described in the context of a single embodiment can also be implemented in multiple embodiments individually or in any suitable sub-combination.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. A resource scheduling method based on a cloud storage system, comprising:
obtaining a traffic characteristic of a target cloud disk and a traffic characteristic of each of a plurality of candidate storage clusters in response to a scheduling instruction of the target cloud disk;
matching a target scheduling strategy from a preset scheduling strategy set according to the traffic characteristic of the target cloud disk and the traffic characteristic of each of the plurality of candidate storage clusters; wherein the scheduling strategy set is used for maintaining a plurality of scheduling strategies configured based on different traffic characteristics; and
matching at least one candidate storage cluster from the plurality of candidate storage clusters as a target storage cluster according to the target scheduling strategy, and controlling the target cloud disk to be scheduled to the target storage cluster.

2. The method according to claim 1, wherein obtaining the traffic characteristic of the target cloud disk and the traffic characteristic of each of the plurality of candidate storage clusters in response to the scheduling instruction of the target cloud disk, comprises:
generating a first scheduling instruction of the target cloud disk in response to a request for creating the target cloud disk initiated by a cloud service tenant; and
in response to the first scheduling instruction of the target cloud disk, obtaining a traffic characteristic of a historical cloud disk of the cloud service tenant as the traffic characteristic of the target cloud disk, and obtaining the traffic characteristic of each of the plurality of candidate storage clusters.

3. The method according to claim 1, wherein obtaining the traffic characteristic of the target cloud disk and the traffic characteristic of each of the plurality of candidate storage clusters in response to the scheduling instruction of the target cloud disk, comprises:
detecting an operating state of a current storage cluster, and in response to the operating state satisfying a scheduling condition, initiating a second scheduling instruction for the target cloud disk which has been created and operated in the current storage cluster; and
obtaining the traffic characteristic of the target cloud disk and obtaining the traffic characteristic of each of the plurality of candidate storage clusters in response to the second scheduling instruction for the target cloud disk.

4. The method according to any one of claims 1-3, further comprises:
dynamically maintaining a traffic characteristic of a cloud disk created by each cloud service tenant in the cloud storage system and a traffic characteristic of each storage cluster in the cloud storage system, wherein the traffic characteristic of the cloud disk comprises a performance distribution characteristic and/or a life cycle characteristic, and the traffic characteristic of the storage cluster comprises a performance distribution characteristic and/or an available resource characteristic.

5. The method according to any one of claims 1-4, further comprises:
dynamically maintaining the scheduling strategy set, wherein the scheduling strategy set at least comprises any one or more of a group consisting of a scheduling strategy based on a complementary performance characteristic, a scheduling strategy based on a service type and a scheduling strategy based on a cloud disk life cycle,
wherein the scheduling strategy based on the complementary performance characteristic is used for indicating that the cloud disk is preferentially scheduled to the target storage cluster with complementary performance to the cloud disk;
the scheduling strategy based on the service type is used for indicating that the cloud disk is preferentially scheduled to the target storage cluster that satisfies a service type characteristic of the cloud disk; and
the scheduling strategy based on the cloud disk life cycle is used for indicating that the cloud disk satisfying a life cycle condition is allowed to be scheduled to the target storage cluster.

6. The method according to claim 5, wherein in response to the target scheduling strategy being the scheduling strategy based on the complementary performance characteristic, matching at least one candidate storage cluster from the plurality of candidate storage clusters as the target storage cluster according to the target scheduling strategy, and controlling the target cloud disk to be scheduled to the target storage cluster, comprises:
for each candidate storage cluster in the plurality of candidate storage clusters, calculating, based on a performance distribution characteristic of the target cloud disk and a performance distribution characteristic of the candidate storage cluster, a performance distribution difference between the target cloud disk and the candidate storage cluster in each period of time as a performance complementarity for the target cloud disk and the candidate storage cluster; and
selecting one candidate storage cluster from the plurality of candidate storage clusters as the target storage cluster according to the performance complementarity, and controlling the target cloud disk to be scheduled to the target storage cluster.

7. The method according to claim 5, wherein in response to the target scheduling strategy being the scheduling strategy based on the service type, matching at least one candidate storage cluster from the plurality of candidate storage clusters as the target storage cluster according to the target scheduling strategy, and controlling the target cloud disk to be scheduled to the target storage cluster, comprises:
determining the service type to which the target cloud disk belongs based on the traffic characteristic of the target cloud disk, wherein the service type comprises a bandwidth type or a capacity type;
for each candidate storage cluster in the plurality of candidate storage clusters, calculating a matching degree between the target cloud disk and the candidate storage cluster based on the service type of the target cloud disk and an available resource characteristic of the candidate storage cluster; and
selecting one candidate storage cluster from the plurality of candidate storage clusters as the target storage cluster according to the matching degree, and controlling the target cloud disk to be scheduled to the target storage cluster.

8. The method according to claim 5, wherein the life cycle condition is that the life cycle has a length greater than a preset threshold, and in response to the scheduling instruction being a second scheduling instruction and the target scheduling strategy being the scheduling strategy based on the cloud disk life cycle, matching at least one candidate storage cluster from the plurality of candidate storage clusters as the target storage cluster according to the target scheduling strategy, and controlling the target cloud disk to be scheduled to the target storage cluster, comprises:
in response to the life cycle of the target cloud disk having a length greater than the preset threshold, matching at least one candidate storage cluster from the plurality of candidate storage clusters as the target storage cluster according to the traffic characteristic of the target cloud disk, and controlling the target cloud disk to be scheduled to the target storage cluster; and
in response to the life cycle of the target cloud disk having a length less than or equal to the preset threshold, keeping a storage cluster to which the target cloud disk belongs unchanged.

9. A resource scheduling apparatus based on a cloud storage system, wherein the apparatus comprises:
a characteristic obtaining module (501), which is configured to obtain a traffic characteristic of a target cloud disk and a traffic characteristic of each of a plurality of candidate storage clusters in response to a scheduling instruction of the target cloud disk;
a strategy matching module (502), which is configured to match a target scheduling strategy from a preset scheduling strategy set according to the traffic characteristic of the target cloud disk and the traffic characteristic of each of the plurality of candidate storage clusters; wherein the scheduling strategy set is used for maintaining a plurality of scheduling strategies configured based on different traffic characteristics;
a cluster matching module (503), which is configured to match at least one candidate storage cluster from the plurality of candidate storage clusters as a target storage cluster according to the target scheduling strategy, and controlling the target cloud disk to be scheduled to the target storage cluster.

10. An electronic device (600), comprising:
at least one processor; and
a memory in communication connection with the at least one processor,
wherein a computer program is stored on the memory, and the computer program, when executed by the at least one processor, cause the at least one processor to execute the resource scheduling method based on the cloud storage system according to any one of claims 1 to 8.

11. The electronic device (600) according to claim 10, wherein obtaining traffic characteristic of the target cloud disk and the traffic characteristic of each of the plurality of candidate storage clusters in response to a scheduling instruction of the target cloud disk, comprises:
generating a first scheduling instruction of the target cloud disk in response to a request for creating the target cloud disk initiated by a cloud service tenant; and
in response to the first scheduling instruction of the target cloud disk, obtaining a traffic characteristic of a historical cloud disk of the cloud service tenant as the traffic characteristic of the target cloud disk, and obtaining the traffic characteristic of each of the plurality of candidate storage clusters.

12. The electronic device (600) according to claim 10, wherein obtaining traffic characteristic of the target cloud disk and the traffic characteristic of each of the plurality of candidate storage clusters in response to a scheduling instruction of the target cloud disk comprises:
detecting an operating state of a current storage cluster, and in response to the operating state satisfying a scheduling condition, initiating a second scheduling instruction for the target cloud disk which has been created and operated in the current storage cluster; and
obtaining the traffic characteristic of the target cloud disk and obtaining the traffic characteristic of each of the plurality of candidate storage clusters in response to the second scheduling instruction for the target cloud disk.

13. The electronic device (600) according to any one of claims 10-12, wherein the computer program, when executed by the at least one processor, cause the at least one processor to further execute:
dynamically maintaining a traffic characteristic of a cloud disk created by each cloud service tenant in the cloud storage system and a traffic characteristic of each storage cluster in the cloud storage system, wherein the traffic characteristic of the cloud disk comprises a performance distribution characteristic and/or a life cycle characteristic, and the traffic characteristic of the storage cluster comprises a performance distribution characteristic and/or an available resource characteristic.

14. A computer-readable storage medium, wherein a computer instruction is stored on the computer-readable storage medium, and the computer instruction, when executed by a processor, causes the processor to implement the resource scheduling method based on the cloud storage system according to any one of claims 1 to 8.

15. A computer program product, wherein the computer program product comprises a computer program which, when executed by a processor, implements the resource scheduling method based on the cloud storage system according to any one of claims 1 to 8.
